# DEMANDE DE BREVET EUROPEEN

(11) **EP 0 780 249 A1**
(43) Date de publication de la demande: **25.06.1997**
(21) Numéro de dépôt: 96402787.4
(22) Date de dépôt: 18.12.1996
(51) Int. Cl.: B60D 1/52

(54) **Dispositif d'attelage à montage/démontage rapide et procédé de montage/démontage d'un tel dispositif**

(30) Priorité: 20.12.1995 FR 9515135
(71) Demandeur: Racaud S.à.r.l., 45800 St-Jean-de-Braye (FR)
(72) Inventeur: Racaud, Didier, 45800 Saint Jean de Braye (FR)
(74) Mandataire: Debay, Yves

(57) **Abrégé**

La présente invention concerne un dispositif d'attelage comprenant une barre d'attelage (2) coudée pourvue, à une extrémité, d'une boule d'attelage (26) ou d'un dispositif permettant la suspension et/ou la fixation d'au moins une bicyclette ou la fixation d'une antenne, la barre (2) étant solidarisable de façon démontable d'un bloc de solidarisation (1) fixé au véhicule, la barre (2) comportant à son autre extrémité, au moins un méplat (21, 22) affleurant une gorge (23), le bloc (1) de solidarisation comportant un perçage (12) de réception de l'extrémité de la barre (2), le dispositif d'attelage étant pourvu de moyens (3, 24, 27) de blocage en rotation de la barre (2) d'attelage en position verticale de travail, caractérisé en ce que le bloc (1) de solidarisation comporte au moins une clavette (51, 53) cylindrique fixe disposée en saillie dans le perçage (12) et assurant le blocage en translation de la barre (2) par rapport au bloc (1), et en ce que les moyens (3, 24, 27) de blocage en rotation sont tangentiels à la barre (2).

## Description

La présente invention concerne un dispositif d'attelage à montage/démontage rapide ainsi que le procédé de montage et démontage d'un tel dispositif d'attelage.

Il est connu des dispositifs d'attelage constitués d'une barre de traction coudée à l'extrémité de laquelle est solidarisée par exemple une rotule. Ces dispositifs constituent des éléments saillants qui peuvent endommager la carrosserie des autres véhicules lors des manoeuvres et on a cherché très rapidement à constituer des dispositifs d'attelage démontables.

Un premier but de l'invention est de proposer un tel dispositif d'attelage facilement démontable qui permet une solidarisation très fiable de la barre de traction avec le véhicule.

Ce premier but est atteint par le fait que le dispositif d'attelage comprend une barre d'attelage coudée pourvue, à une extrémité, d'une boule d'attelage ou d'un dispositif permettant la suspension et/ou la fixation d'au moins une bicyclette ou d'une antenne, la barre étant solidarisable de façon démontable d'un bloc de solidarisation fixé au véhicule, la barre comportant, à son autre extrémité, au moins un méplat affleurant une gorge, le bloc de solidarisation comportant un perçage de réception de l'extrémité de la barre, le dispositif d'attelage étant pourvu de moyens de blocage en rotation de la barre d'attelage en position verticale de travail, caractérisé en ce que le bloc de solidarisation comporte au moins une clavette cylindrique fixe disposée en saillie dans le perçage et assurant le blocage en translation de la barre par rapport au bloc, les moyens de blocage en rotation étant tangentiels à la barre.

Selon une autre particularité le perçage est un trou borgne, la ou les clavettes fixes étant à une distance de l'entrée du trou borgne correspondant à la position de la gorge sur la barre lorsque cette dernière est introduite dans le perçage de réception du bloc.

Selon une autre particularité les moyens de blocage tangentiels en rotation de la barre sont formés d'au moins une entaille tangentielle dans la barre et d'au moins un doigt, mobile en rotation ou/et en translation dans un logement tangentiel du bloc, perpendiculaire à l'axe de symétrie de la barre, le ou les doigts étant mobiles dans leur logement respectifs entre, une position saillante dans le perçage du bloc, et une position non saillante.

Selon une autre particularité la ou les entailles de la barre sont constituées par des méplats.

Selon une autre particularité les portions saillantes du ou des doigts ont des formes complémentaires des entailles respectives de la barre.

Selon une autre particularité le ou les doigts sont sollicités en permanence vers leur position saillante par des moyens élastiques.

Selon une autre particularité un moyen de renvoi d'un bouton d'actionnement du ou des doigts est constitué d'un axe pourvu de deux pignons dont l'un engrène avec une denture du bouton d'actionnement et l'autre avec la denture du ou des doigts de blocage.

Selon une autre particularité le ou les doigts de blocage en rotation sont constitués de clavettes pivotantes pourvues chacune d'un évidement permettant le passage de la barre dans le perçage de réception du bloc, la ou les clavettes comportant chacune une denture formant un pignon, la partie cylindrique d'un bouton d'actionnement étant introduite dans un perçage parallèle à l'axe de symétrie du trou borgne, et comporte au moins une crémaillère formée sur sa tige, la ou les crémaillères engrenant les pignons des clavettes pivotantes.

Selon une autre particularité la ou les clavettes pivotantes sont actionnées par au moins un levier, le levier étant sollicité en permanence par des moyens élastiques dans la position dans laquelle les clavettes pivotantes sont saillantes dans le perçage.

D'autres particularités et avantages de la présente invention apparaîtront plus clairement à la lecture de la description ci-après faite en référence aux dessins annexés dans lesquels :
la figure 1 représente une vue en perspective d'une première variante de réalisation de l'invention ;
la figure 2 représente une vue de face de la première variante de réalisation de l'invention avec coupe du bloc de solidarisation dans un plan contenant l'axe de symétrie du doigt de verrouillage;
la figure 3 représente une vue de dessus d'une deuxième variante de réalisation de l'invention ;
la figure 4 représente une vue en perspective d'une troisième variante de réalisation de l'invention ;
la figure 5A représente une vue en coupe et de côté de la troisième variante de réalisation de l'invention ;
la figure 5B représente une vue de dessus de la troisième variante de réalisation de l'invention.
la figure 6 représente une vue en perspective d'une quatrième variante de l'invention dans laquelle les moyens de blocage de la rotation de la barre d'attelage sont actionnés par un levier.

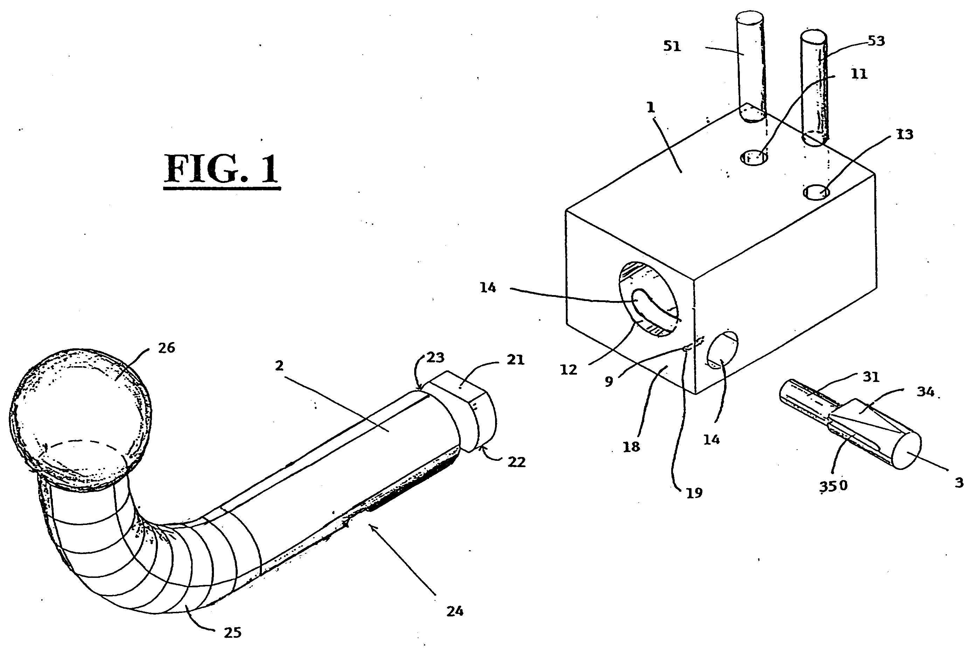

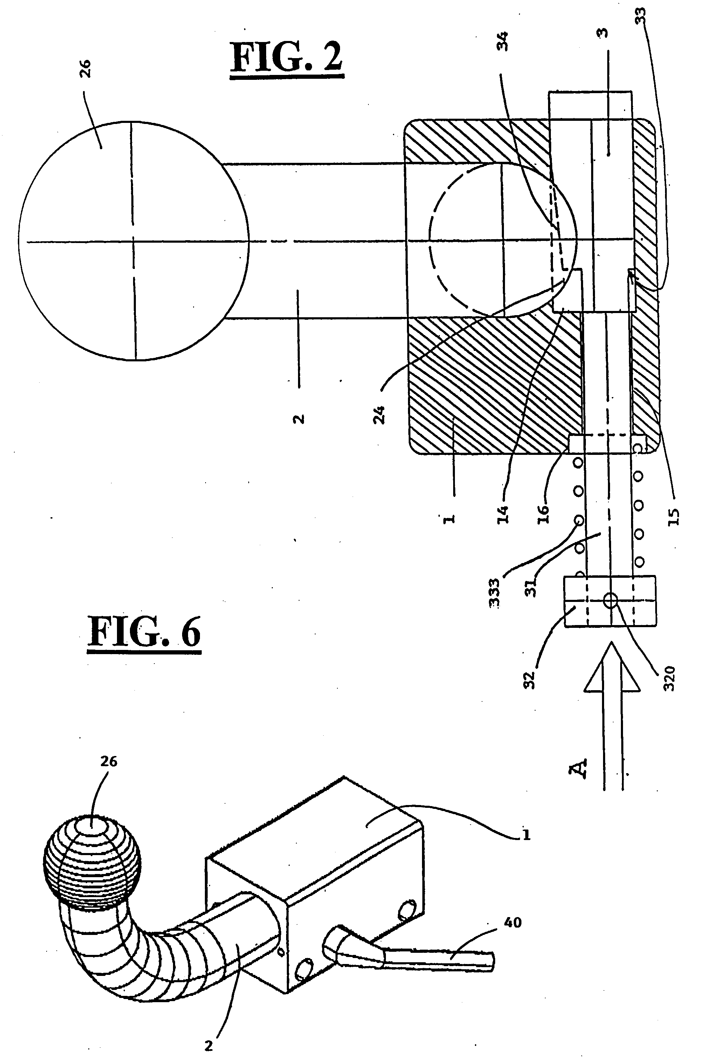

L'invention sera décrite dans une première variante de réalisation en liaison avec les figures 1 et 2. Cette invention est constituée d'une barre (2) d'attelage coudée à une extrémité et comportant à cette extrémité coudée une boule (26) d'attelage. L'autre extrémité de la barre comporte deux méplats (21, 22) qui affleurent le fond d'une gorge (23) circulaire. Une troisième entaille (24) ou méplat, est pratiquée également dans la partie de la barre opposée à l'extrémité comportant la boule (26). Dans une autre variante de réalisation, l'extrémité coudée de la barre (2) d'attelage peut être pourvue d'un dispositif connu permettant la suspension et/ou la fixation d'une bicyclette. Ce dispositif porte-vélos peut comporter par exemple un élément de suspension et un élément de fixation connus permettant de maintenir le ou les vélos en place sur le véhicule malgré les cahots du véhicule sur une route inégale. De la même manière, l'extrémité coudée de la barre (2) d'attelage peut être pourvue d'un dispositif connu permettant la fixation d'une antenne telle qu'une antenne de C.B. Cette barre (2) est destinée à être introduite dans le trou (12), borgne ou non, d'un bloc (1) de solidarisation fixé au véhicule. Le bloc (1) de solidarisation comporte deux perçages (11, 13) verticaux débouchant dans le trou (12) borgne comme on peut le voir à la figure (5A). Les perçages (11, 13) verticaux sont disposés à une distance de la face (18) avant du bloc (1) de façon à être situés dans le même plan que la gorge (23) de la barre (2) lorsque cette dernière est introduite dans le bloc (1).

Un quatrième perçage (14) est formé selon une direction perpendiculaire à l'axe du perçage du trou (12) et parallèle au plan contenant les axes de symétrie des deux perçages (11, 13) verticaux. Ce quatrième perçage (14) qui forme un trou borgne se prolonge, comme représenté à la figure 2, par un perçage (15) de diamètre plus petit que le perçage (14) et d'axe décalé, lequel perçage (15) débouche de l'autre côté du bloc (1) de solidarisation par un perçage (16) de diamètre plus important formant une surface d'épaulement pour des moyens élastiques tel qu'un ressort (333). Un doigt (3) de verrouillage de la rotation de la barre (2) par rapport au bloc (1) est constitué d'un cylindre comportant un méplat (34) incliné et se prolongeant par un doigt cylindrique (31) d'axe décalé qui correspond à l'axe du perçage (15). L'extrémité de ce cylindre (31) comporte une bague (32) fixée sur l'extrémité de ce cylindre (31) par une vis (320) et constituant le bouton poussoir (32) de déverrouillage. La bague (32) sert de deuxième surface d'appui pour le ressort (333). De cette façon le doigt (3) de verrouillage est en permanence sollicité de façon à ce que l'épaulement (33) vienne en butée dans le fond du perçage (14). L'espacement entre les perçages (11, 13) est prévu de façon que les clavettes (51, 53) cylindriques qui sont montées dans ces perçages viennent se loger dans la gorge (23) une fois la barre introduite. La distance séparant les méplats (21, 22) correspond à la distance séparant les génératrices des deux clavettes (51, 53) se trouvant en vis à vis une fois les clavettes mises en place.

Le mode de réalisation de la première variante permet donc à l'utilisateur après avoir enfoncé le bouton (32) de déverrouillage d'introduire la barre d'attelage en faisant subir à cette barre une rotation de 90 ° de façon à amener la boule (26) dans un plan horizontal parallèle au plan du doigt (3) ; à introduire la barre (2) ainsi positionnée de façon à ce que les méplats (21, 22) viennent se glisser dans l'espace libre entre les génératrices des deux clavettes (51, 53), puis à provoquer la rotation du bras d'attelage (2) de façon que la boule (26) d'attelage se retrouve en position verticale haute c'est à dire de travail. Dans cette position de travail, les deux clavettes (51, 53), logées dans la gorge (23) de la barre (22), bloquent toute translation de cette dernière par rapport au bloc (1). L'utilisateur une fois arrivé dans cette position libère le doigt (3) de verrouillage en supprimant la force de maintient qui était exercée selon la flèche A sur le bouton poussoir (32).

Bien sûr, l'invention n'est pas limitée à l'exemple de réalisation décrit ci-dessus. En particulier, l'extrémité non coudée de la barre (2) peut comporter un seul méplat qui affleure le fond de la gorge (23) circulaire. Dans ce cas, le bloc (1) de solidarisation comporte un seul perçage débouchant dans le trou (12) borgne et destiné à une unique clavette fixe de blocage de la translation de la barre (2). Comme précédemment, l'unique perçage est disposé à une distance de la face avant de façon que la clavette cylindrique fixe qui est montée dans le perçage vienne se loger dans la gorge (23) une fois la barre (2) introduite. Le montage de la barre (2) dans le bloc étant sensiblement identique au montage décrit ci dessus. De la même manière, la disposition du ou des perçages (11, 13) destinés aux clavettes (51, 53) n'est pas limitée à l'exemple décrit ci-dessus. Par exemple, le ou les perçages (11, 13) peuvent être horizontaux, et dans ce cas, la position du méplat (21) de l'extrémité de la barre (2) est adaptée en conséquence. Enfin, dans le cas où cela n'entraîne pas une concentration de contraintes trop importante, la barre (2) peut comporter un épaulement (28) circulaire qui vient s'appuyer sur la face avant du bloc (1) lorsqu'elle est introduite dans ce dernier.

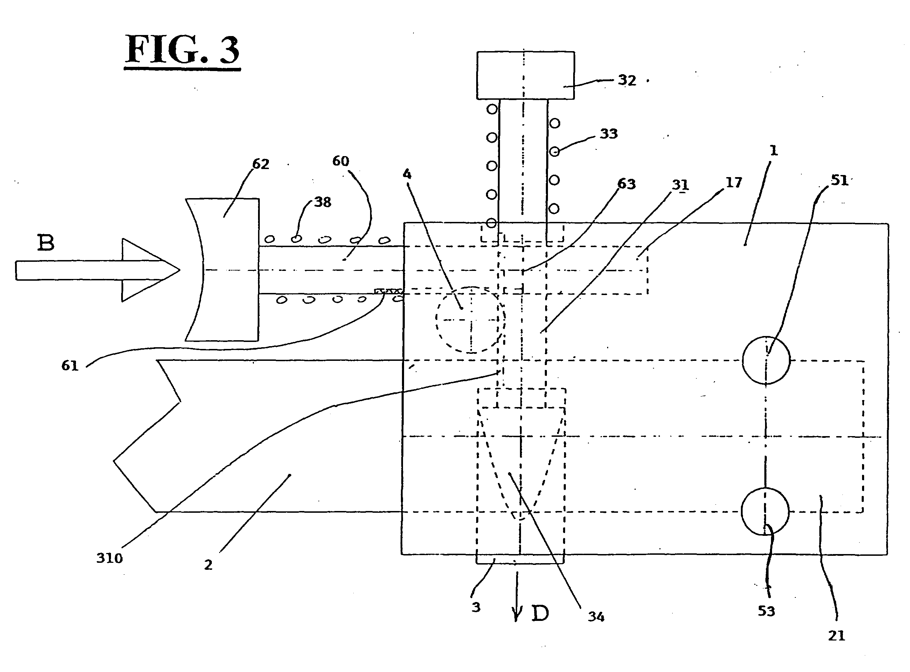

La figure 3 représente une deuxième variante de réalisation dans laquelle le bouton poussoir est orienté selon une direction parallèle à l'axe de symétrie de la barre (2) d'attelage. Dans cette réalisation le dispositif est en tout point identique au dispositif de la figure 1, et le doigt (3) de verrouillage comporte sur sa partie cylindrique (31) décalée une crémaillère (310) engrenant avec un double pignon (4) dont le pignon supérieur engrène avec une crémaillère (61) formée sur une barre (60) cylindrique pourvue à son extrémité d'un bouton poussoir (62). La barre (60) cylindrique pénètre dans un trou (17), borgne ou non, et le bouton poussoir (62) est sollicité dans sa position la plus en saillie par un ressort (38). Lorsque l'utilisateur exerce une force dans la direction de la flèche B, la crémaillère (61) entraîne la denture supérieure du pignon (4) lequel par sa denture inférieure entraîne le doigt (3) en translation, de façon à provoquer son déplacement dans le sens de la flèche D. De cette façon l'orifice d'entrée (12) de la barre (2) est libéré et la mise en place de la barre (2) d'attelage se fait de façon identique à celle décrite en liaison avec les figures 1 et 2. Le pignon (4) est placé dans un logement du boîtier (1) ou bloc de solidarisation formé par un perçage cylindrique borgne débouchant tangentiellement d'une part sur le perçage (17) et d'autre part sur le perçage (15) de façon à permettre l'engrenage des deux pignons avec chacune des crémaillères respectives (61, 310).

Dans une variante de réalisation on peut prévoir une tige (60) plus longue et placer le doigt (3) de blocage après les goupilles (51, 53) de façon à ce que le méplat (34) coopère avec un des méplats (21, 22) de la barre (2) d'attelage. Cette dernière variante permet de supprimer un usinage supplémentaire. Dans ce cas le perçage (17) débouche aux deux extrémités de façon à offrir un débattement suffisant à la tige (60).

Dans cette variante les perçages (15, 14) sont décalés et se trouvent entre les perçages (11, 13) et le fond du trou borgne (12).

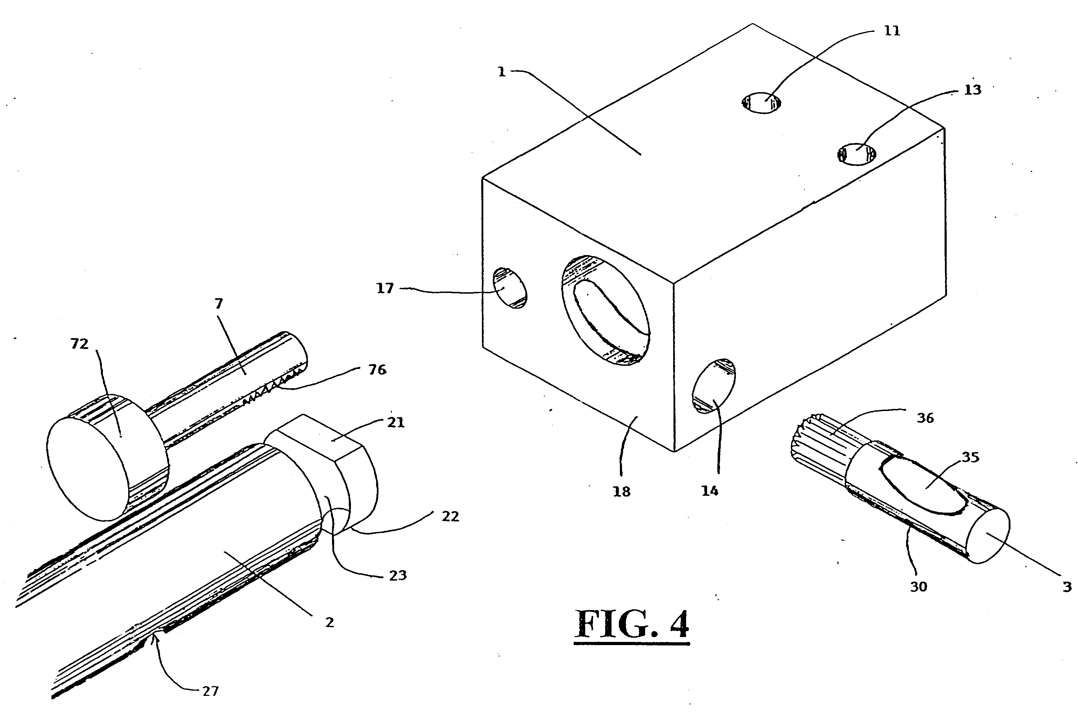

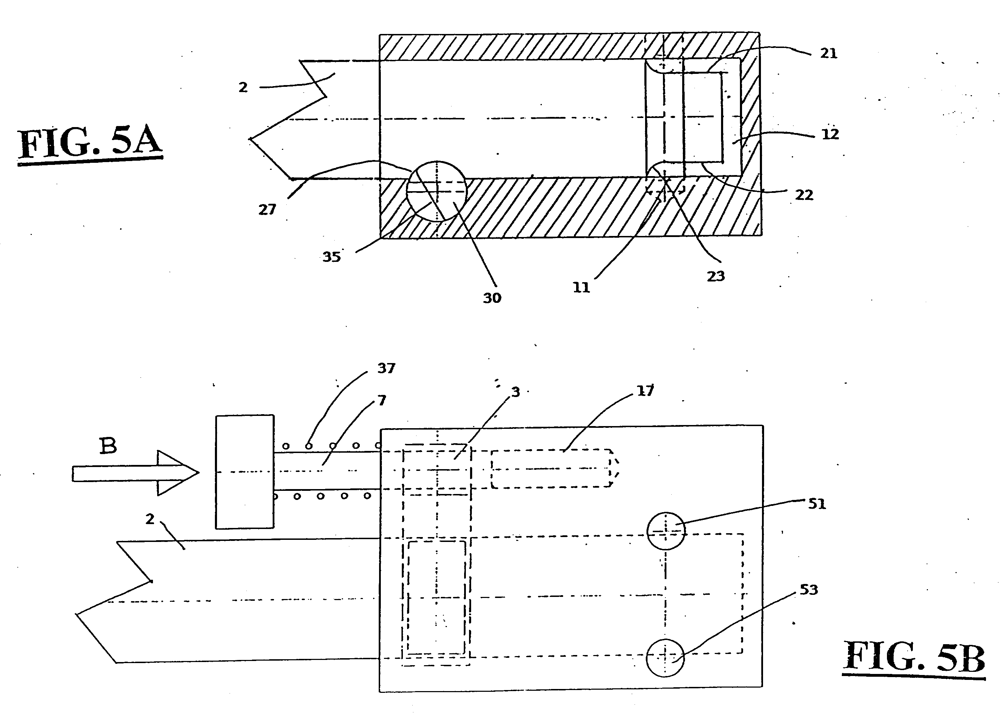

Les figures 4 et 5 représentent un autre mode de réalisation de l'attelage dans lequel le verrouillage angulaire de la barre d'attelage (2) s'effectue par une clavette (3) pivotante tangentielle. Cette clavette (3) pivotante comporte un évidement (35) permettant le passage de la partie cylindrique (2) et se prolonge par une partie dentée (36) formant un pignon à une de ces extrémités. Ce pignon (36) engrène avec une crémaillère (76) formée sur la tige (7) d'un bouton d'actionnement (72). La partie cylindrique (7) de ce bouton d'actionnement (72) est introduite dans un perçage (17) parallèle à l'axe de symétrie du trou borgne (12) et disposé de façon à ce que la crémaillère (76) engrène avec le pignon (36). La barre d'attelage (2) comporte un alésage (27) cylindrique, et le perçage (14) est placé de façon à ce que la partie cylindrique du doigt (3) de blocage viennent se placer dans l'alésage cylindrique (27) de la barre (2) d'attelage lorsque celle-ci est introduite en fond de logement. L'alésage cylindrique (27) formé sur la barre (2) est tangentiel à la barre (2), et de direction perpendiculaire à l'axe de symétrie de la barre (2). Lorsque l'utilisateur relâche l'effort exercé dans la direction de la flèche B, figure 5B, la tige (7) entraîne par sa crémaillère (76) le pignon (36) en rotation qui provoque la rotation de la clavette (3) amenant sa partie cylindrique (30) en coopération avec l'évidement cylindrique (27) de la barre d'attelage (2) lorsque la boule d'attelage (26) est en position verticale haute. Comme on peut le voir sur la figure 5A, le trou (12) borgne est légèrement plus long que la longueur séparant l'épaulement (28) de l'extrémité de la barre d'attelage (2).

Dans l'exemple de réalisation de la figure 1 il est possible de prévoir une goupille (9, figure 1) logée dans un perçage (19) du boîtier (1) de solidarisation et débouchant dans le perçage (14) prévu pour le doigt (3) de blocage. Le perçage (19) est placé de façon que la goupille (9) puisse coopérer avec une rainure (350) longitudinale formée sur le doigt (3), pour guider en translation ce dernier.

De même on peut prévoir une légère excentricité sur le cylindre (30, figure 4) avec les aménagements nécessaires dans le perçage (14, figure 4) pour assurer une meilleure pénétration du doigt dans le logement (27).

Ainsi, dans le dispositif selon l'invention, la ou les clavettes (51, 53) cylindriques fixes bloquent toute translation de la barre (2) par rapport ou bloc (1). La ou les clavettes (3) pivotantes, ou doigts (3) mobiles, tangentiels à la barre (2), bloquent quant à eux la rotation de la barre (2) par rapport ou bloc (1). Ce verrouillage ou blocage en rotation de la barre (2) est empêché par les parties saillantes des doigts (3) et clavettes (3) logées dans la ou les entailles (24) tangentielles de la barre (2). Les doigts et/ou clavettes (3) subissent donc des efforts de compression pour s'opposer à la rotation de la barre (2) dans le bloc (1).

Dans une autre variante de l'invention représentée à la figure 6, la clavette (3) pivotante qui verrouille la rotation de la barre (2) d'attelage par rapport au bloc (1) est actionnée par un levier (40) de type connu. Avantageusement, des moyens élastiques connus sollicitent en permanence le levier (40) dans la position dans laquelle la clavette (3) pivotante est en position saillante dans le perçage (12). Par exemple, la clavette (3) pivotante actionnée par le levier engrène avec une tige pourvue d'une crémaillère et disposée de façon sensiblement identique à la tige (7) de la figure 4, le bloc (1) comportant un ressort de rappel intérieur qui repousse en permanence la tige pour placer la clavette (3) en position saillante. Le montage de la barre (2) s'effectue sensiblement de la même façon que décrit précédemment. L'opérateur manoeuvre le levier (40) en le tournant dans le sens horaire, par exemple de 150 degrés, pour permettre l'introduction de la barre (2) dans le perçage (12). Un système de butée de type connu peut être prévu pour limiter la rotation du levier (40). Cette butée peut être réalisée par la compression du ressort de rappel mentionné ci-dessus et par la fin de taillage de la crémaillère. Quand la barre (2) est engagée à fond dans le perçage (12) l'opérateur lâche le levier (40) et pivote la barre (2) dans sa position de travail, c'est à dire la boule (26) ou le dispositif d'accrochage de vélos orientés vers le haut. Le levier (40) se bloque alors de lui-même. Pour le démontage, l'opérateur tire à nouveau le levier (40) dans le sens horaire, et pivote la barre (2) en position horizontale. Puis l'opérateur tire la barre (2) hors du bloc (1) en maintenant le levier (40) pivoté dans le sens horaire. Lorsque la barre (2) est sortie du bloc (1), l'opérateur lâche le levier (40). Un bouchon de protection (non représenté) peut être placé dans l'orifice (12) du bloc pour éviter que des éléments indésirables tels du sable ou de la terre ne se logent dans ce dernier.

D'autres modifications à la portée de l'homme de métier font également partie de l'esprit de l'invention.

## Revendications

1. Dispositif d'attelage comprenant une barre d'attelage (2) coudée pourvue, à une extrémité, d'une boule d'attelage (26) ou d'un dispositif permettant la suspension et/ou la fixation d'au moins une bicyclette ou la fixation d'une antenne, la barre (2) étant solidarisable de façon démontable d'un bloc de solidarisation (1) fixé au véhicule, la barre (2) comportant à son autre extrémité, au moins un méplat (21, 22) affleurant une gorge (23), le bloc (1) de solidarisation comportant un perçage (12) de réception de l'extrémité de la barre (2), le dispositif d'attelage étant pourvu de moyens (3, 24, 27) de blocage en rotation de la barre (2) d'attelage en position verticale de travail, caractérisé en ce que le bloc (1) de solidarisation comporte au moins une clavette (51, 53) cylindrique fixe disposée en saillie dans le perçage (12) et assurant le blocage en translation de la barre (2) par rapport au bloc (1), et en ce que les moyens (3, 24, 27) de blocage en rotation sont tangentiels à la barre (2).

2. Dispositif d'attelage selon la revendication 1, caractérisé en ce que le perçage (12) est un trou borgne, la ou les clavettes (51, 53) fixes étant à une distance de l'entrée du trou borgne (12) correspondant à la position de la gorge (23) sur la barre (2) lorsque cette dernière est introduite dans le perçage (12) de réception du bloc (1).

3. Dispositif d'attelage selon la revendication 1 ou 2, caractérisé en ce que les moyens (3, 24 27) de blocage tangentiels en rotation de la barre (2) sont formés d'au moins une entaille (24, 27) tangentielle dans la barre (2) et d'au moins un doigt (3), mobile en rotation ou/et en translation dans un logement (14) tangentiel du bloc, perpendiculaire à l'axe de symétrie de la barre (2), le ou les doigts (3) étant mobiles dans leur logement respectifs entre, une position saillante dans le perçage (12) du bloc (1), et une position non saillante.

4. Dispositif d'attelage selon la revendication 3, caractérisé en ce que la ou les entailles (24, 27) de la barre (2) sont constituées par des méplats.

5. Dispositif d'attelage selon la revendication 3 ou 4, caractérisé en ce que les portions saillantes du ou des doigts (3) ont des formes complémentaires des entailles respectives (24, 27) de la barre (2).

6. Dispositif d'attelage selon une des revendications 3 à 5, caractérisé en ce que le ou les doigts (3) sont sollicités en permanence vers leur position saillante par des moyens élastiques (333).

7. Dispositif d'attelage selon une des revendications 3 à 6, caractérisé en ce qu'un moyen de renvoi d'un bouton d'actionnement (62) du ou des doigts (3) est constitué d'un axe (4) pourvu de deux pignons dont l'un engrène avec une denture (61) du bouton d'actionnement et l'autre avec la denture (36) du ou des doigts (3) de blocage.

8. Dispositif d'attelage selon une des revendications 3 à 6 caractérisé en ce que le ou les doigts (3) de blocage en rotation sont constitués de clavettes (3) pivotantes pourvues chacune d'un évidement (35) permettant le passage de la barre (2) dans le perçage (12) de réception du bloc (1), la ou les clavettes (3) comportant chacune une denture (36) formant un pignon, et en ce que la partie cylindrique d'un bouton (62) d'actionnement est introduite dans un perçage (17) parallèle à l'axe de symétrie du trou (12) borgne, et comporte au moins une crémaillère (76) formée sur sa tige (7), la ou les crémaillères (76) engrenant les pignons (36) des clavettes (3) pivotantes.

9. Dispositif d'attelage selon la revendication 8 caractérisé en ce que la ou les clavettes (3) pivotantes sont actionnées par au moins un levier (40), le levier (40) étant sollicité en permanence par des moyens élastiques dans la position dans laquelle les clavettes (3) pivotantes sont saillantes dans le perçage (12).
